# EUROPÄISCHE PATENTSCHRIFT

(11) **EP 0 812 935 B1**
(45) Veröffentlichungstag und Bekanntmachung des Hinweises auf die Patenterteilung: **14.08.2002**
(21) Anmeldenummer: 97107720.1
(22) Anmeldetag: 12.05.1997
(51) Int. Cl.: C25B 1/00, F16N 11/10, F03G 7/00, H01M 6/00

(54) **Verfahren und Vorrichtung zur gesteuerten oder geregelten Förderung von fliessfähigen Medien mit einer Gasentwicklungszelle und einem Strömungsvervielfacher**
Method and device for controlling the delivering of fluids with a gas generating cell and a flow multiplier
Procédé et dispositif de commande du refoulement de fluides avec une cellule de génération de gaz et un multiplicateur de débit

(30) Priorität: 14.05.1996 DE 19619376
(43) Veröffentlichungstag der Anmeldung: 17.12.1997
(73) Patentinhaber: WINSEL, August, Prof. Dr., D-65779 Kelkheim (DE)
(72) Erfinder: WINSEL, August, Prof. Dr., D-65779 Kelkheim (DE)
(74) Vertreter: Specht, Peter, Dipl.-Phys.

(56) Entgegenhaltungen:
- WO-A-89/08800
- DE-A- 3 643 352
- DE-C- 4 446 463

## Beschreibung

Es ist nach DE-PS 35 32 335.3 Stand der Technik, daß man technische Fette mit Hilfe von Fettspritzen, die mit Wasserstoffentwicklungszellen betrieben werden, in Kugel und Wälzlager fördert. Auch gibt es Infusoren zur Injektion oder Infusion von medizinischen Flüssigkeiten, die mit Gasentwicklungszellen mechanisch angetrieben werden. In diesen Geräten erzeugt ein konstanter oder geregelter elektrischer Strom in der Gasentwicklungszelle einen Gasmengenstrom, der genau proportional diesem elektrischen Strom ist. Das erzeugte Gas verdrängt einen Kolben aus dem Arbeitsraum eines Zylinders, in dessen Förderraum sich das zu fördernde Medium, meist eine Paste oder eine Flüssigkeit befindet. Da die Gasentwicklung genau proportional dem Zellstrom ist, können derartige Geräte sehr einfach geregelt und gesteuert werden, indem man den Schließungswiderstand der Zelle variiert.

In der Wasserstoffentwicklungszelle nach DE-PS 35 32 335.3 wird der Wasserstoff durch Abscheidung an einer Kathode mit hydrophil/hydropober Porenstruktur erzeugt. Als Anode dient Zink. Elektrolyt ist Kalium- oder Natriumhydroxidlösung. Durch die Begrenzung der elektrochemischen Vorgänge auf den Elektroden ist auch die Gasentwicklung begrenzt. Der Zellstrom und damit die höchstmögliche Gaserzeugungsrate, damit aber auch die maximale Förderrate der Paste oder Flüssigkeit sind dadurch begrenzt. Man kann für höhere Förderraten größere Gasentwicklungszellen bauen und einsetzen oder in bekannter Weise Zellen zur parallelen Gaserzeugung elektrisch in Serie schalten, doch ist dieses mit erhöhten Kosten verbunden. Die Gaserzeugungsrate zu vergrößern und zu vervielfachen ist die Aufgabe dieser Erfindung.

Es ist auch bekannt, daß man Gase aus Flüssigkeiten freisetzen kann. Zum Beispiel kann man Wasserstoff entwickeln, indem man Alkaliboranat, zum Beispiel Kaliumboranat KBH₄ oder Natriumboranat NaBH₄ in wäßriger Lösung mit Dehydrierungskatalysatoren in Kontakt bringt. Dabei wird Wasserstoff nach der Gleichung KBH₄ + 2H₂O = KBO₂ + 4H₂ oder NaBH₄ + 2H₂O = NaBO₂ + 4H₂ entwickelt. Aus 1 g NaBH₄ entstehen bei der Zersetzung 2370 ccm Wasserstoff. Bei einer 10%igen Lösung sind etwa 100 mg NaBH₄ in 1 ccm Lösung enthalten; daraus entstehen also 237 ccm Wasserstoff. Die Zersetzung wird in alkalischer Lösung gehemmt, in saurer Lösung beschleunigt. Besonders schnell verläuft sie bei Anwesenheit von Dehydrierungskatalysatoren besonders aus den Metallen der 8. Spalte des periodischen Systems der Elemente. Von diesen ist aus Preisgründen das Raney-Nickel geeignet, daß man aus einer Nickel/Aluminiumlegierung durch Herauslösen des Aluminiums mit Hilfe einer Alkalilauge erhält. Besonders aktiv ist dieser Katalysator, wenn er Zusätze von Eisen (10 Gew.%) oder Kobalt enthält. Auch ist es von Vorteil, das Raney - Nickel zu entpyrophorisieren und durch Temperung zu stabilisieren.

Bringt man eine Lösung von Natriumboranat mit dem Raney-Nickel in Kontakt, so wird das Boranat sehr schnell in Wasserstoff und Natriumboranat zersetzt. Die Zersetzung findet auch an solchen Katalysatoren statt, die Platin, Palladium, Nickel und/oder andere Metalle der 8. Spalte auf Aktivkohle, Kieselgur, Aluminiumoxyd oder ähnliche poröse Trägermaterialien enthalten. Saure Lösungen beschleunigen diesen Zersetzungsvorgang.

Man kann einen Gasstrom auch durch die Verwendung einer wäßrigen Hydrazinlösung als zersetzbare Flüssigkeit erzielen. N₂H₄ zerfällt an den genannten Katalysatoren in ein H₂/N₂-Gemisch mit mehr oder weniger großen Beimengungen von Ammoniak gemäß den Gleichungen N₂H₄ = N₂ + 2H₂ und 3N₂H₄ = 4NH₃ + N₂. Am Raney-Nickel läuft bevorzugt die Zersetzung in Wasserstoff und Stickstoff ab. Enthält Raney-Nickel 10 % Eisen, so spaltet der Katalysator in ein sehr heißes Ammoniak/Stickstoffgemisch.

Durch Zersetzung von Wasserstoffperoxid kann man Sauerstoffgas erzeugen. Die zersetzbare Flüssigkeit H₂O₂ in wäßriger Lösung wird über einen der bekannten Zersetzungskatalysatoren geleitet und dabei in Wasser und Sauerstoffgas zerlegt. Bevorzugt wird Silber als Katalysator verwendet und bevorzugt in feiner Verteilung als Ranesilber, als Molekularsilberpulver oder auf porösen Trägermassen (Aktivkohle, Aluminiumoxid, Braunstein) niedergeschlagenes Silber.

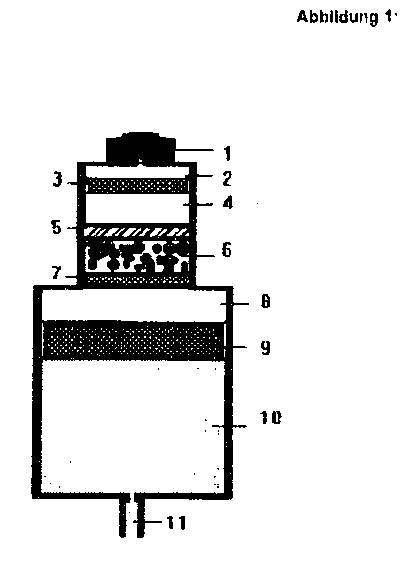

Die Durchführung des Verfahrens soll an Abb. 1 erläutert werden. Zugleich zeigt Abb. 1 eine Ausführungsform der beanspruchten Vorrichtung. In dieser Vorrichtung besteht die erste Stufe aus den Komponenten 1, 2, 3, 4 und 5, die zweite aus den Komponenten 6, 7, 8, 9, 10 und 11. Dabei ist 1 die Gasentwicklungszelle, die nach DE-PS 35 32 335.3 Wasserstoff oder Sauerstoff in einer durch den Zellstrom vorgegebenen Rate erzeugt. 1 enthält als Symbol hier auch die Konstruktionselemente zur Einstellung des Zellstromes wie den Belastungswiderstand und gegebenenfalls eine Hilfsstromquelle. 1 steht aber auch symbolisch für mehrere Gasentwicklungszellen, die für die Gasströmung parallel jedoch elektrisch in Serie geschaltet sind. Die Gaszelle 1 liefert das Gas in den Arbeitsraum 2 im ersten Förderzylinder und verdrängt damit den Kolben 3 in den Förderraum 4, der die Zersetzerflüssigkeit enthält. Über das Ventil 5, das in diesem Fall eine grobporige hydrophobe Scheibe sein soll, wird die Flüssigkeit in den Reaktorraum 6 der zweiten Stufe gefördert, der den Zersetzungskatalysator für die unter Gasentwicklung zersetzbare Flüssigkeit enthält. Das Ventil 7 ist in diesem Fall eine feinporige hydrophobe Scheibe, die die Flüssigkeit sperrt doch das in 6 erzeugte Gas in den Gasraum des zweiten Förderzylinders eintreten läßt. Hier baut sich jetzt ein Gasdruck auf, der den zweiten Kolben 9 verdrängt und das im Förderraum 10 befindliche Fördergut bei 11 bestimmungsgemäß herausdrückt.

Das Ventil 5, in Abb. 1 eine grobporige hydrophobe Scheibe, soll die Flüssigkeit für den Zersetzer solange aus dem Zersetzerraum 6 fernhalten, wie sich noch kein Gasdruck in der Gasentwicklungszelle aufgebaut hat. Danach soll es einen möglichst gleichmäßigen Fluß gewährleisten, damit keine Zersetzungsstöße in 6 entstehen. Eine grobporige hydrophobe Scheibe 5 hält die Zersetzerflüssigkeit in 4 zurück und kann nur durch die Flüssigkeit überwunden werden, wenn deren hydrostatischer Druck gegenüber dem Druck in 6 die Kapillardepression in den Poren überwinden kann. In diesem Sinne wirkt die Vorrichtung auch dann, wenn die Flüssigkeit in 4 sich in einem Schwamm befindet, der durch die Wirkung des Kolbens 3 ausgedrückt wird. Der Schwamm erhöht die Rückhaltesicherheit der Zersetzerflüssigkeit.

Die Zersetzerflüssigkeit in 4 muß nicht selbst zersetzbar sein; es genügt, wenn sie beim Einflößen in den Reaktorraum 6 die Zersetzung der dort befindlichen Festsubstanz oder Flüssigkeit initiiert. Zum Beispiel kann man Natriumboranatpulver - eventuell mit einem Katalysator vermischt - im Reaktorraum lagern. Beim Einflößen der wäßrigen Zersetzerflüssigkeit wird das Boranatpulver gelöst, gelangt an den Katalysator und wird zersetzt. Die Zersetzerwirkung kann man durch die Wahl des pH-Wertes der Zersetzerflüssigkeit zusätzlich beeinflussen, da saure Lösungen die Stabilität des Boranates verringern.

Nachteilig wirkt sich die mögliche Wasseraufnahme durch Natriumboranat in 6 über die hydrophobe Ventilscheibe 5 während der Lagerzeit auf die Stabilität von Natriumboranat aus. Man kann sie mit einem Ventil 5 verhindern, das bei Überdruck in 4 den Weg in den Reaktor 6 für die Zersetzerflüssigkeit freigibt, das jedoch für Wasserdampf undurchlässig ist. Diese Aufgabe löst eine Wasserdampf sperrende Platzmembran, deren Sperrwirkung nach der Aktivierung der Vorrichtung nicht mehr erforderlich ist.

Das erfindungsgemäße Gerät ist sehr anpassungsfähig an praktische Aufgaben. Das soll an dem folgenden Ausführungsbeispiel demonstriert werden. Eine Wasserstoffentwicklungszelle in der Größe der oft verwendeten Hörgerätezelle mit 6,5 mm Durchmesser und 5,6 mm Höhe liefert an 130 Ω Kurzschlußwiderstand 2,2 mA; dieser Strom verursacht einen Fluß der Zersetzerflüssigkeit von 0,92 cm³/h. Besteht die Zersetzerlösung aus 10%iger Natriumboranatlösung, so wird die Wasserstoffmenge von 0,92 cm³/h der Gaszelle auf 218 cm³/h des Zersetzers vervielfacht.

Die Katalysatormenge im Reaktor muß sich nach der gewünschten Leistung richten. Für das genannte Beispiel reicht eine Katalysatormenge von 100 mg Raney-Nickel aus. Man wird jedoch zur Erhöhung der Funktionssicherheit die doppelte bis dreifache Menge einbauen, je nach der Konstruktion des Katalysatorbettes. So ist es vorteilhaft, als Katalysatorbett Ronden aus einer porösen Gaselektrode nach EP-PS 0 144 002 B1 auszustanzen, die etwa 1 mg/cm² Raney-Nickel mit PTFE gebunden auf ein Cu- oder Ni-Netz aufgewalzt enthält. Das Metallnetz sorgt dann für die Verteilung der Zersetzungswärme, während die PTFE-Bindung des Katalysators den Kornzerfall verringert.

Zwei Ronden mit je 1 cm Durchmesser bilden - übereinandergelegt - ein solches Bett. Für die Aufnahme des Volumens der Restlösung kann man wasserbindende Stoffe wie Kieselgur, Quellmittel oder Kunststoffschwämme mit in den Reaktorraum einbringen, die verhindern sollen, daß die feinporige hydrophobe Membran durch einen Flüssigkeitsfilm für den Gasdurchtritt gesperrt werden kann.

Alternativ zu der oben beschriebenen Anordnung wurden 0,1 g NaBH₄-Pulver zusammen mit 0,2 g trockenen Raney-Nickel vermischt und in die Reaktorkammer 6 eingefüllt. Die Zersetzerflüssigkeit bestand aus schwach alkalisch gepuffertem Wasser. Die Zersetzungsreaktion trat mit dem Einspritzen der Zersetzerlösung aus 4 in 6 ein. Man kann für die Füllung von 6 auch eine Mischung verwenden, die man durch Mischen von Boranatpulver mit Raney-Nickel und PTFE-Pulver in einem schnell laufenden Mischwerk erzeugt.

Im Falle des durch Zersetzung von H₂O₂-Lösung betriebenen Fördergerätes nach der Erfindung wird aus Sicherheitsgründen eine Sauerstoffentwicklungszelle verwendet, obwohl die erste Stufe auch mit Wasserstoff angetrieben werden kann. Die Zersetzerflüssigkeit ist 30%ige wäßrige H₂O₂-Lösung. Pro 1 g Lösung werden hieraus mit einem Silberkatalysator 100 Ncm³ Gas entwickelt. Bei Verwendung einer 70%igen Lösung sind es 230 Ncm³ Gas. Als Katalysator können Ronden der in Spalte 3 der DE-OS 37 10-168 A1 beschriebenen "hochaktiven Silberelektrode" empfohlen werden. Da diese Elektrode vor ihrer Reduktion aus Ag₂O besteht, kann man sie auch in diesem Zustand einbauen, da das Ag₂O durch H₂O₂ reduziert wird und der dabei frei werdende Sauerstoff die Fördermenge erhöht. Im übrigen sind die für den Zersetzer von Boranatlösung geschilderten Maßnahmen zur Ausgestaltung der Erfindung auf diese Variante übertragbar. Lediglich der den Zersetzungsvorgang auslösende Gaszellenstrom ist gegenüber der Wasserstoffentwicklungszelle zu verdoppeln, um den gleichen Gasvolumenstrom zu erzeugen.

## Patentansprüche

1. Verfahren zum Fördern von fließfähigen Medien wie Pulvern, Pasten und Flüssigkeiten durch gesteuerte oder geregelte Gasentwicklung in einem mehrstufigen Prozeß, **dadurch gekennzeichnet, daß** mit Hilfe einer Gasentwicklungszelle Wasserstoff oder Sauerstoff in einer durch den Zellstrom vorgegebenen Rate erzeugt wird, daß das erzeugte Gasvolumen ein Zersetzerflüssigkeitsvolumen in einer dem Zellstrom mittelbar proportionalen Rate aus einem Flüssigkeitsspeicher in einen katalytischen Zersetzer fördert, der einen Zersetzungskatalysator und im Falle einer nicht selbst zersetzbaren Zersetzungsflüssigkeit eine zersetzbare Substanz enthält und daß das in diesem Reaktor durch katalytische Zersetzung erzeugte Gasvolumen einen Kolben oder eine Verdrängermembran antreibt, die das fließfähige Fördermedium zum Bestimmungsort transportiert.

2. Verfahren zum Fördern von fließfähigen Medien durch gesteuerte oder geregelte Gasentwicklung in einem mehrstufigen Prozeß nach Anspruch 1, **dadurch gekennzeichnet, daß** die Gasentwicklungszelle Wasserstoff entwickelt und die zersetzbare Substanz der zweiten Stufe eine Lösung, eine Paste oder ein Pulver eines Metallboranats MBH₄ ist bzw. dieses enthält, wobei M für ein Alkalimetall wie Natrium, Kalium oder Lithium steht.

3. Verfahren zum Fördern von fließfähigen Medien durch gesteuerte oder geregelte Gasentwicklung in einem mehrstufigen Prozeß nach Anspruch, 1, **dadurch gekennzeichnet, daß** die Gasentwicklungszelle Sauerstoff entwickelt und die zersetzbare Flüssigkeit der zweiten Stufe eine Lösung oder Paste von Wasserstoffperoxid ist bzw. Wasserstoffperoxid enthält.

4. Vorrichtung zum Fördern von fließfähigen Medien wie Pulvern, Pasten und Flüssigkeiten durch gesteuerte oder geregelte Gasentwicklung in einem mehrstufigen Prozeß nach den vorherigen Ansprüchen, **dadurch gekennzeichnet, daß** die erste Stufe aus einer Gasentwicklungszelle (1) einem elektrischen Schließungskreis mit festem oder veränderlichem Widerstand, einem Schalter und gegebenenfalls einer Hilfsspannungsquelle besteht, daß eine Gasleitung den Innenraum der Gasentwicklungszelle mit dem Antriebsraum (2) eines ersten Kolbens (3) in einem ersten Förderzylinder verbindet, der im ersten Förderraum (4) eine - gegebenenfalls zersetzbare - Zersetzerflüssigkeit enthält, weiter **dadurch gekennzeichnet, daß** der erste Förderraum (4) über ein Ventil (5) mit einem sich anschließenden Zersetzerraum (6) kommuniziert, in dem sich der Zersetzungskatalysator - und gegebenenfalls die zersetzbare Substanz - befindet und daß der Zersetzerraum (6) über eine feinporige hydrophobe Scheibe (7) mit dem Antriebsraum (8) eines zweiten Förderzylinders verbunden ist, der einen zweiten Förderkolben (9) und einen zweiten Förderraum (10) mit dem zu fördernden fließfähigen Medium enthält.

5. Vorrichtung nach Anspruch 4, **dadurch gekennzeichnet, daß** die Zersetzerflüssigkeit im Förderraum (4) der ersten Stufe in einem ausdrückbaren schwammartigen Körper aufgesaugt vorliegt.

6. Vorrichtung nach Anspruch 4 und 5, **dadurch gekennzeichnet, daß** der Zersetzerraum (6) das zersetzbare Medium pulverförmig zusammen mit dem Katalysator enthält.

7. Vorrichtung nach Anspruch 4, 5 und 6, **dadurch gekennzeichnet, daß** die grobporige hydrophobe Ventilmembran (5) aus PTFE (Polytetrafluorethylen) besteht.

8. Vorrichtung nach Anspruch 4, 5, 6 und 7, **dadurch gekennzeichnet, daß** die Ventilschicht (5) aus grobporigem PTFE (Polytetrafluorethylen) und einer Wasserdampf sperrenden Platzmembran besteht.

## Claims

1. Method for delivering free-flowing media, such as powders, pastes and liquids, by controlled evolution of gas in a multistage process, **characterized in that** hydrogen or oxygen is generated with the aid of a gas evolution cell at a rate which is predetermined by the cell current, **in that** the volume of gas which is generated delivers a decomposition liquid volume from a liquid store into a catalytic decomposer at a rate which is indirectly proportional to the cell current, which catalytic decomposer includes a decomposition catalyst and, in the case of a decomposition liquid which cannot be decomposed of its own accord, a decomposable substance, and **in that** the volume of gas which is generated in this reactor through catalytic decomposition drives a piston or a displacement diaphragm, which conveys the free-flowing delivery medium to the destination.

2. Method for delivering free-flowing media by controlled evolution of gas in a multistage process according to Claim 1, **characterized in that** the gas evolution cell evolves hydrogen, and the decomposable substance used in the second stage is a solution, a paste or a powder of a metal borohydride MBH₄ or contains this compound, where M is an alkali metal, such as sodium, potassium or lithium.

3. Method for delivering free-flowing media by controlled evolution of gas in a multistage process according to Claim 1, **characterized in that** the gas evolution cell evolves oxygen and the decomposable liquid used in the second stage is a solution or paste of hydrogen peroxide or contains hydrogen peroxide.

4. Device for delivering free-flowing media, such as powders, pastes and liquids, by controlled evolution of gas in a multistage process as described in the preceding claims, **characterized in that** the first stage comprises a gas evolution cell (1), an electrical closure circuit with a fixed or variable resistance, a switch and, if appropriate, an auxiliary voltage source, **in that** a gas line connects the interior of the gas evolution cell to the drive space (2) of a first piston (3) in a first delivery cylinder, which in the first delivery space (4) contains an - optionally decomposable - decomposition liquid, and also **characterized in that** the first delivery space (4) is in communication, via a valve (5), with an adjoining decomposition space (6), in which the decomposition catalyst - and if appropriate the decomposable substance - is/are located, and **in that** the decomposition space (6) is connected, via a finely porous hydrophobic disc (7), to the drive space (8) of a second delivery cylinder, which contains a second delivery piston (9) and a second delivery space (10) holding the free-flowing medium which is to be delivered.

5. Device according to Claim 4, **characterized in that** the decomposition liquid in the delivery space (4) of the first stage has been sucked up by a sponge-like body which can be pressed out.

6. Device according to Claims 4 and 5, **characterized in that** the decomposition space (6) contains the decomposable medium in powder form together with the catalyst.

7. Device according to Claims 4, 5 and 6, **characterized in that** the coarsely porous hydrophobic valve diaphragm (5) consists of PTFE (polytetrafluoroethylene).

8. Device according to Claims 4, 5, 6 and 7, **characterized in that** the valve layer (5) consists of coarsely porous PTFE (polytetrafluoroethylene) and a rupture diaphragm which acts as a barrier to water vapour.

## Revendications

1. Procédé pour transporter des produits coulants tels que poudres, pâtes et liquides par dégagement commandé ou régulé de gaz dans un processus à plusieurs étapes, **caractérisé en ce qu'**à l'aide d'une cellule de production de gaz on produit de l'hydrogène ou de l'oxygène à un débit prédéfini par le courant de la cellule, **en ce que** le volume de gaz produit transporte un volume de liquide de décomposition à un débit directement proportionnel au courant de la cellule, depuis un stockeur de liquide jusqu'à un décomposeur catalytique qui contient un catalyseur de décomposition et, dans le cas d'un liquide de décomposition lui-même non décomposable, une substance décomposable, et **en ce que** le volume de gaz produit dans ce réacteur, par décomposition catalytique, entraîne un piston ou une membrane de refoulement qui transporte le produit coulant à transporter vers le lieu de destination.

2. Procédé de transport de produits coulants par dégagement commandé ou régulé de gaz dans un processus à plusieurs étapes selon la revendication 1, **caractérisé en ce que** la cellule de dégagement de gaz dégage de l'hydrogène et la substance décomposable du deuxième étage est une solution, une pâte ou une poudre d'un boranate de métal MBH₄, ou contient celui-ci, M désignant un métal alcalin tel que sodium, potassium ou lithium.

3. Procédé de transport de produits coulants par dégagement commandé ou régulé de gaz dans un processus à plusieurs étapes selon la revendication 1, **caractérisé en ce que** la cellule de dégagement de gaz développe de l'oxygène et le liquide décomposable du deuxième étage est une solution ou une pâte de peroxyde d'hydrogène ou contient du peroxyde d'hydrogène.

4. Dispositif de transport de produits coulants tels que poudres, pâtes et liquides par dégagement commandé ou régulé de gaz dans un processus à plusieurs étapes selon les revendications précédentes, **caractérisé en ce que** le premier étage est constitué d'une cellule de dégagement de gaz (1), d'un circuit électrique de fermeture à résistance fixe ou variable, d'un interrupteur et le cas échéant d'une source de tension auxiliaire, **en ce qu'**une conduite de gaz relie la chambre intérieure de la cellule de dégagement de gaz à la chambre d'entraînement (2) d'un premier piston (3) dans un premier cylindre de transport qui contient, dans la première chambre de transport (4), un liquide de décomposition - éventuellement décomposable -, **caractérisé en outre en ce que** la première chambre de transport (4) communique, par une soupape (5), avec une chambre de décomposition (6) attenante dans laquelle se trouve le catalyseur de décomposition - et éventuellement la substance décomposable -, et **en ce que** la chambre de décomposition (6) est reliée, par un disque hydrophobe (7) à pores fins, à la chambre d'entraînement (8) d'un deuxième cylindre de transport qui contient un deuxième piston de transport (9) et une deuxième chambre de transport (10) avec le produit coulant à transporter.

5. Dispositif selon la revendication 4, **caractérisé en ce que** le liquide de décomposition dans la chambre de transport (4) du premier étage se trouve aspiré dans un corps spongieux qui peut être pressuré.

6. Dispositif selon les revendications 4 et 5, **caractérisé en ce que** la chambre de décomposition (6) contient le produit décomposable sous forme pulvérulente en même temps que le catalyseur.

7. Dispositif selon les revendications 4, 5 et 6, **caractérisé en ce que** la membrane de soupape hydrophobe (5) à gros pores est constituée de PTFE (polytétrafluoréthylène).

8. Dispositif selon les revendications 4, 5, 6 et 7, **caractérisé en ce que** la couche de soupape (5) est constituée de PTFE (polytétrafluoréthylène) à gros pores et d'une membrane de rupture qui fait barrière à la vapeur d'eau.
